# EUROPEAN PATENT SPECIFICATION

(11) **EP 3 566 286 B1**
(45) Date of publication and mention of the grant of the patent: **05.05.2021**
(21) Application number: 18701615.9
(22) Date of filing: 03.01.2018
(51) Int. Cl.: H02K 1/14, H02K 1/27, H02K 9/02

(54) **MOTOR WITH INTERNAL CLAW POLE STATOR**
MOTOR MIT INTERNEM KLAUENPOLMOTOR
MOTEUR À STATOR À GRIFFES INTERNES

(30) Priority: 09.01.2017 US 201762443965 P
(43) Date of publication of application: 13.11.2019
(73) Proprietor: Carrier Corporation, Jupiter, FL 33458 (US)
(72) Inventor: PIECH, Zbigniew, Farmington, Connecticut 06032 (US)
(74) Representative: Dehns
(86) International application number: PCT/US2018/012216
(87) International publication number: WO 2018/129066

(56) References cited:
- WO-A1-2007/043161
- WO-A1-2007/043161
- KR-A- 20070 105 549
- KR-A- 20070 105 549
- US-A1- 2004 196 832
- US-A1- 2005 006 975
- US-A1- 2005 006 975
- US-A1- 2006 192 443
- US-A1- 2006 192 443
- US-A1- 2008 007 126
- US-A1- 2008 007 126
- US-A1- 2008 074 009
- US-A1- 2008 074 009
- US-A1- 2016 352 201
- US-A1- 2016 352 201

## Description

### BACKGROUND

Embodiments of this disclosure relate generally to a motor, and more particularly, to a high efficiency motor for use in heating, ventilation, and air condition applications.

Increases in heating, ventilation, air conditioning, and refrigeration (HVAC&R) system efficiency have resulted in substantial reductions in energy use. However, the blower motors used to move air in these systems have not seen significant efficiency improvements and have much lower efficiencies. For example, HVAC&R systems commonly use split capacitor, single phase or three phase induction motors without speed control. These motors are characterized not only by their low efficiency, but also by their oversized structure. As furnaces and air conditioners have become more efficient, the fraction of total energy consumption for HVAC&R systems attributed to the blower motors has increased, thus making blower motors a greater contributor to the overall system energy use.

US 2006/192443 A1 discloses a claw pole PM stepping motor with magnet rotors positioned at a space created between a main yoke member and two sub-yoke members, wherein the yoke members each have claw-poles.

US 2008/007126 A1 discloses two claw pole stators, each with first and second claw pole plates and with a toroid coil situated between the claw pole plates, wherein the two claw pole stators are joined with a rotor body between them.

WO 2007/043161 A1 discloses a rotary electric machine with a stator comprising stator cores with teeth extending in the radial direction and annular coils between the cores.

US 2008/074009 A1 discloses a fan system with a three-phase claw-pole motor with upper and lower stator cores and coils between the cores, forming a stator unit.

### SUMMARY

According to a first embodiment, a claw pole motor is provided including a rotor rotatable about an axis; and a stator assembly. The stator assembly includes a plurality of stator elements having one or more claw pole teeth such that when said plurality of stator elements is assembled, the claw pole teeth extend between a first end and a second end of said stator assembly. The stator assembly additionally includes at least one coil winding positioned between said plurality of stator elements. The stator assembly further comprises a first stator end element, a second stator end element, two interior stator elements disposed between said first stator end element and said second stator end element, each of said first stator end element, said second stator end element, and said two interior stator elements being arranged generally parallel; and a drive unit sandwiched between two adjacent interior stator elements.

In addition to one or more of the features described above, or as an alternative, in further embodiments said first stator end element, said second stator end element, and said two interior stator elements are rotated relative to one another about an axis.

In addition to one or more of the features described above, or as an alternative, in further embodiments said claw pole teeth of said first stator end element, said second stator end element, and said two interior stator elements are arranged in an intermeshing relationship.

In addition to one or more of the features described above, or as an alternative, in further embodiments said stator assembly includes a first interior stator element and a second interior stator element. The first coil winding is positioned a between said first stator end element and said first interior stator element and said second coil winding being positioned between said second interior stator element and said second stator end element.

In addition to one or more of the features described above, or as an alternative, in further embodiments at least one of said plurality of stator elements includes a feature for retaining said at least one coil winding.

In addition to one or more of the features described above, or as an alternative, in further embodiments said feature includes a cylindrical feature receivable within a central bore of said at least one coil winding.

In addition to one or more of the features described above, or as an alternative, in further embodiments said claw pole teeth extend from a periphery of said plurality of stator elements, and an outer diameter of said drive unit is less than or substantially equal to an inner diameter defined by said claw pole teeth.

In addition to one or more of the features described above, or as an alternative, in further embodiments said stationary stator is supported by a stationary shaft, and wiring associated with said drive unit is arranged within a hollow interior of said stationary shaft.

According to another embodiment, a claw pole motor includes a housing, a stationary shaft associated with said housing, a stator assembly according to the first embodiment supported by said stationary shaft, wherein the rotor is operable to generate a cooling flow for cooling said stator assembly.

In addition to one or more of the features described above, or as an alternative, in further embodiments said rotor includes a plurality of fins configured to force a flow of air into an interior of said housing as said rotor rotates about said axis.

In addition to one or more of the features described above, or as an alternative, in further embodiments said stationary shaft is a generally hollow and is arranged in fluid communication with an interior of said housing.

In addition to one or more of the features described above, or as an alternative, in further embodiments wherein said rotor and said stator assembly are arranged generally concentrically, said stator assembly being at least partially positioned within a hollow interior of said rotor.

In addition to one or more of the features described above, or as an alternative, in further embodiments said cooling flow is configured to flow through said plurality of stator elements.

### BRIEF DESCRIPTION OF THE DRAWINGS

The invention is particularly pointed out and distinctly claimed in the claims at the conclusion of the specification. The foregoing and other features, and advantages of the present disclosure are apparent from the following detailed description taken in conjunction with the accompanying drawings in which:

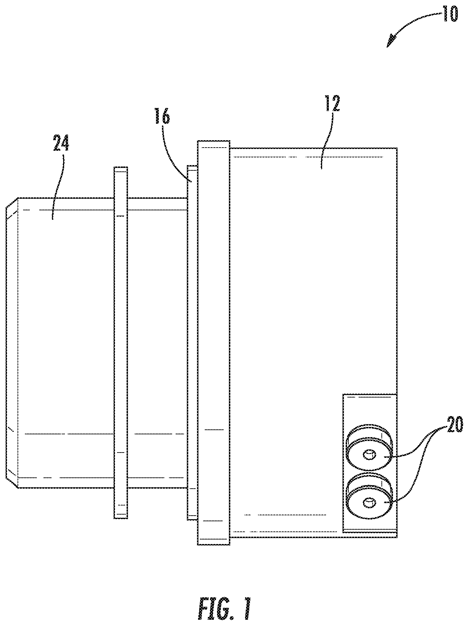

FIG. 1 is a side view of a claw pole motor according to an embodiment;
FIG. 2 is an exploded perspective view of the claw pole motor of FIG. 1 according to an embodiment;
FIG. 3 is another exploded perspective view of the claw pole motor of FIG. 1 according to an embodiment;
FIG. 4 is another exploded perspective view of the stator assembly of the claw pole motor of FIG. 1 according to an embodiment; and
FIG. 5 is a perspective view of the stator assembly of the claw pole motor of FIG. 1 with one of the plurality of stator elements removed according to an embodiment; and
FIG. 6 is a perspective view of the stages of assembling the stator according to an embodiment.

The detailed description explains embodiments of the present disclosure, together with advantages and features, by way of example with reference to the drawings.

### DETAILED DESCRIPTION

Referring now to the FIGS, an example of a motor 10 according to an embodiment is illustrated. The motor 10 includes a housing 12 having a stationary shaft 14 extending from a first end 16 of the housing 12 and defining an axis A. The stationary shaft 14 may be integrally formed with or removably coupled to the housing 12. The housing 12 may have a generally hollow interior 18 within which a transformer or other components associated with operation of the motor 10 may be located. In an embodiment, a portion of the stationary shaft 14 extends through the first end 16 of the housing 12 into the hollow interior 18 of the housing 12. In an embodiment, one or more connectors 20, such as sealing grommets for example, or alternatively, a sealed opening may be used to provide electrical wires to the housing 12.

The motor 10 additionally includes a stator assembly 22 supported by the stationary shaft 14 and a rotor 24 having a general coaxial orientation relative to axis A. The stator assembly 22 and the rotor 24 may be arranged substantially concentrically such that an air gap (not shown) is defined there between. In the illustrated, non-limiting embodiment, the rotor 24 is an external rotor having a hollow cylindrical shape within which the stator assembly 22 is positioned. However, embodiments where the rotor 24 is an internal rotor arranged within a cavity defined by the stator assembly 22 are also contemplated herein. The rotor 24 may be formed from any suitable material. For example the rotor 24 may be formed from a magnet surrounded by a plastic material, formed entirely from a magnetic material, or formed from any material and have one or more magnets affixed thereto.

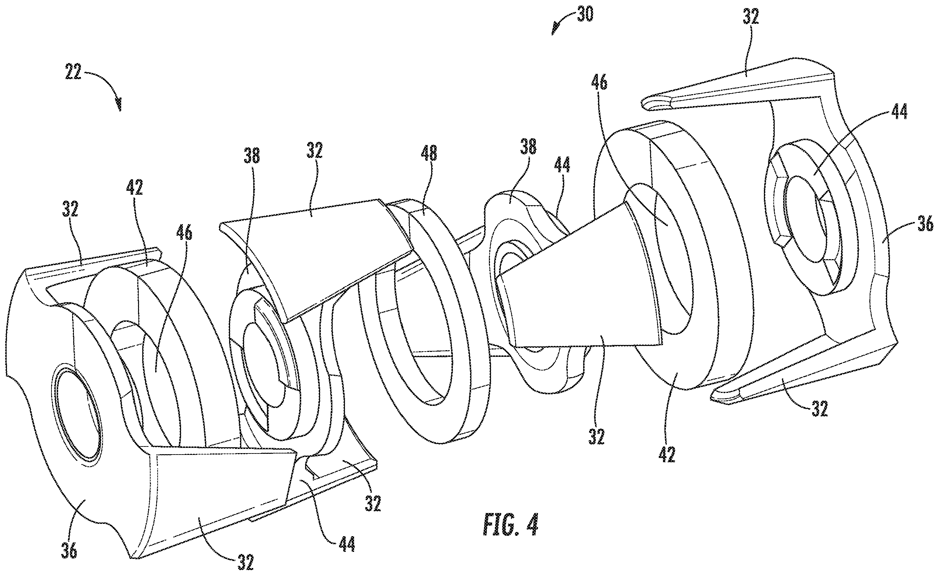

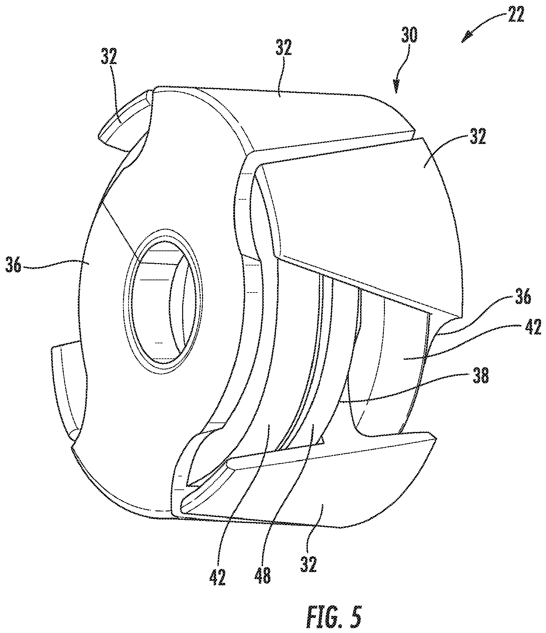

With specific reference now to the two phase motor of FIGS. 4 and 5, the stator assembly 22 includes a plurality of stator elements 30 arranged generally parallel to one another. The stator elements 30 may be formed from any suitable ferromagnetic material, such as a sintered or powdered metal material for example. Each of the stator elements 30 includes one or more claw pole teeth 32 formed at and extending from a peripheral edge thereof in a direction generally parallel to the axis A. The stator elements include both stator end elements 36 and stator interior elements 38. A first stator end element 36 and a second stator end element 36 are arranged at opposing ends of the stator assembly 22. As shown, the first stator end element and the second stator end element 36 are axially reversed such that the stator end elements 36 generally face towards one another. In an embodiment, the first and second stator end element 36 are rotated 180 electrical degrees relative to one another, which translates to a geometric angle equal to 2^{∗}(360/total number of stator teeth), where the number of stator teeth is equal to 4^{∗}N, and N is a natural number. However, embodiments where the first and second stator end elements 36 are at another relative angle are also contemplated herein.

In the illustrated, non-limiting embodiment, each of the stator end elements 36 includes two claw pole teeth 32 spaced substantially equidistantly about a periphery of the stator end element 36. The first stator end element 36 is rotated about the axis A relative to the second stator end element 36 such that the claw pole teeth 32 of the first stator end element 36 are skewed relative to the claw pole teeth 32 of the second stator end element 36.

As shown, the stator elements 30 additionally include two interior stator elements 38. The interior stator elements 38 are disposed at a position between the first and second stator end elements 36. The interior stator elements 38 may, but need not, have the same number of claw pole teeth as the stator end elements 36. The claw pole teeth 32 of the one or more interior stator elements 38 are generally complementary in size and shape to the claw pole teeth 32 of the stator end elements 36. As a result of the central positioning of the interior stator elements 38, the claw pole teeth 32 of such interior stator elements 38 extend beyond the planar surfaces of the interior stator element 38 in both a first direction, towards the first stator end element 36, and a second, opposite direction, towards the second stator end element 36. In the illustrated, non-limiting embodiment, each of the interior stator elements 38 also includes two claw pole teeth 32 spaced substantially equidistantly about a periphery of the interior stator element 38. The interior stator elements 38 are rotated about the axis A relative to the first stator end element 36, the second stator end element 36, and another interior stator element 38 such that the claw pole teeth 32 of each interior stator element 38 are skewed relative to the other claw pole teeth 32 of the plurality of stator elements 30.

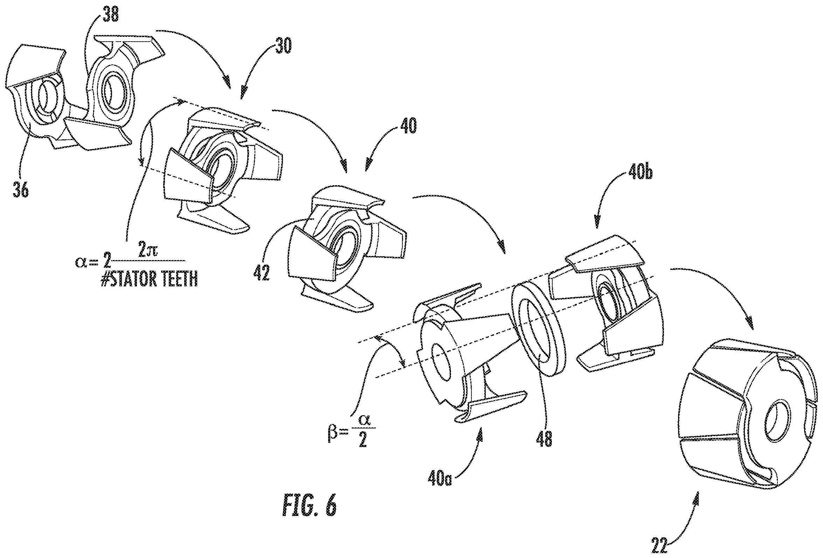

When assembled, the process of which is best illustrated in FIG. 6, the claw pole teeth 32 of each stator element 30 are arranged in an intermeshing relationship extending between the planes defined by the first and second stator end elements 36, oriented generally perpendicular to the axis A. Accordingly, the claw pole teeth 32 extending from the first and second stator end elements 36 and from the stator interior elements 38 associated therewith have a substantially similar axial length, and may have a generally complementary shape that allows the plurality of teeth 32 to fit together to define a periphery of the stator. In the illustrated, non-limiting embodiment, the claw pole teeth 32 have generally angled sides to form a generally trapezoidal shape. Adjacent teeth 32 are arranged in an alternating configuration. For example, the portion of a first tooth 32 adjacent the first stator end element 36 is wider than the portion of the first tooth 32 adjacent the second stator end element 36. A second tooth 32 positioned directly next to the first tooth 32 is configured such that the portion of a second tooth 32 adjacent the second stator end element 36 is wider than the portion of the second tooth 32 adjacent the first stator end element 36. As shown, the stator assembly 22 is generally cylindrical in shape; however it should be understood that embodiments where the stator assembly 22 has another configuration, such as a frusto-conical shape for example, are also contemplated herein.

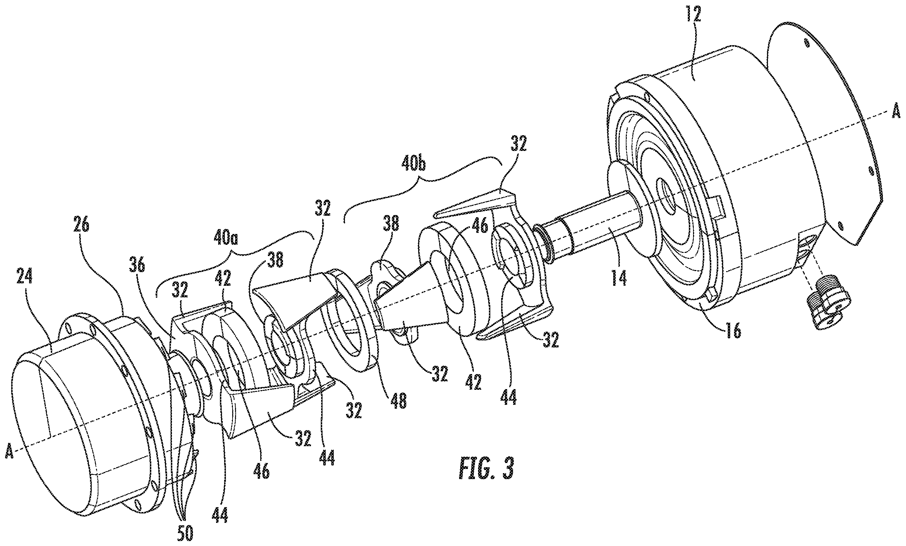

In the illustrated, non-limiting embodiment of FIG. 3, the stator elements 30 are subdivided into pairs comprising a stator end element and a corresponding interior stator element. Accordingly, the stator assembly 22 includes a first sub assembly 40a defined by the first stator end element 36 and an adjacent interior stator element 38, and a second sub assembly 40b defined by a second interior stator element 38 and the adjacent second stator end element 36. However it should be understood that in other embodiments, the stator elements 30 may be provided with more than two sub-assemblies.

As shown, the first sub assembly 40a additionally includes one or more coil windings 42 operable to define a first phase. Similarly, the second sub assembly 40b includes one or more coil windings 42 operable to define a second phase. In an embodiment, an outer diameter of the coil winding 42 is substantially equal to or slightly smaller than an inner diameter defined by the plurality of claw pole teeth 32. Each of the coil windings 42 is centrally located between a respective stator end element 36 and an adjacent interior stator element 38. One or more features 44 formed in the stator end elements 36 and/or the interior stator elements 38 may seat and retain the coil winding 42 in a desired position within the subassembly. In the illustrated, non-limiting embodiment, a cylindrical feature 44 extends from the stator end element 36 and/or the interior stator elements 38 and is received within the central bore 46 of the coil winding 42, In addition, the features 44 of the stator end element 36 and interior stator element 38 within a sub assembly 40a, 40b may engage one another within the interior of the bore 46 of the coil winding 42. In such embodiments, the features 44 may include complementary contours that limit rotation of the stator end element 36 relative to the interior stator element 38 within the sub assembly 40a 40b.

A drive unit 48 consisting of a control is additionally housed within the stator assembly 22. In embodiments where the stator assembly 22 includes an even number of sub-assemblies 40, the drive unit 48 may be located at a center of the stator assembly 22 with half of the sub-assemblies 40 located on each side thereof As shown, the drive unit 48 is sandwiched between two adjacent interior stator elements 38. However, embodiments where the drive unit 48 is located at another position within the stator assembly, such as within the interior of a sub-assembly for example, are also within the scope of the disclosure. In an embodiment, an outer diameter of the drive unit 48 is substantially equal to or slightly smaller than an inner diameter defined by the plurality of claw pole teeth 32, such that the plurality of claw pole teeth 32 surround a periphery of the drive unit 48 to capture the drive unit 48 within the stator assembly 22. The wiring associated with the coil windings 42 and/or the drive unit 48 may be located within the hollow interior of the stationary shaft 14.

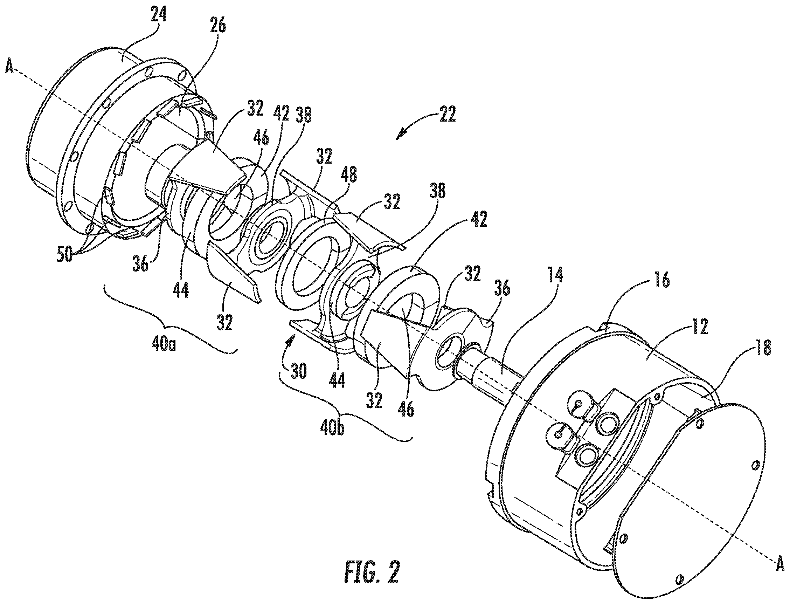

Referring again to FIGS. 2-3, a plurality of cooling fins 50 extending from a portion of the rotor 24, such as a first end 26 arranged directly adjacent the housing 12 for example. In the illustrated, non-limiting embodiment, the fins 50 are arranged about the circumference of the rotor 24 and are skewed relative to axis A. During operation of the motor 10, the rotor 24 is rotated about the axis A. As the rotor 24 rotates, the cooling fins 50 push a flow of air through one or more openings formed in the adjacent end 16 of housing 12. The continued pressure generated by the flow or air into the hollow interior 18 of the housing 12 drives a flow of air into and through the hollow stationary shaft 14. The air within the shaft is then evacuated through an opposite end of the shaft into the interior of the rotor 24 where it cools the plurality of components of the stator assembly 22.

The motor 10 illustrated and described herein has simplicity that allows for low cost manufacturing. Further, the integration of the motor structure, specifically the stator assembly 22 with the drive unit 48, provides for enhance thermal management of the motor 10. The motor 10 is suitable for use in blower heating, ventilation, air conditioning and refrigeration systems, as well as any application with lower power loads and requiring high efficiency.

While the disclosure has been described in detail in connection with only a limited number of embodiments, it should be readily understood that the disclosure is not limited to such disclosed embodiments. Rather, the invention can be modified to incorporate any number of variations, alterations, substitutions or equivalent arrangements not heretofore described, but which are within the scope of the appended claims. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A claw pole motor (10) comprising:
a rotor (24) rotatable about an axis; and
a stator assembly (22) including:
a plurality of stator elements (30) having one or more claw pole teeth (32) such that when said plurality of stator elements (30) is assembled, said claw pole teeth (32) extend between a first end and a second end of said stator assembly, and
at least one coil winding (42) positioned between said plurality of stator elements (30); wherein said stator elements (30) include:
a first stator end element (36);
a second stator end element (36);
two interior stator elements (38) disposed between said first stator end element (36) and said second stator end element (36), each of said first stator end element (36), said second stator end element (36), and said two interior stator elements (38) being arranged generally parallel;
wherein the claw pole motor (10) is **characterised in that** a drive unit (48) is sandwiched between two adjacent interior stator elements (38).

2. The claw pole motor (10) of claim 1, wherein said first stator end element (36), said second stator end element (36), and said two interior stator elements (38) are rotated relative to one another about an axis.

3. The claw pole motor (10) of claim 1 or claim 2, wherein said claw pole teeth (32) of said first stator end element (36), said second stator end element (36), and said two interior stator elements (38) are arranged in an intermeshing relationship.

4. The claw pole motor (10) of any of claims 1-3, wherein said stator assembly (22) includes a first interior stator element (38) and a second interior stator element (38), said first coil winding (42) being positioned between said first stator end element (36) and said first interior stator element (38) and said second coil winding (42) being positioned between said second interior stator element (38) and said second stator end element (36).

5. The claw pole motor (10) of any of the preceding claims, wherein at least one of said plurality of stator elements (30) includes a feature (44) for retaining said at least one coil winding (42).

6. The claw pole motor (10) of claim 5, wherein said feature (44) includes a cylindrical feature (44) receivable within a central bore (46) of said at least one coil winding (42).

7. The claw pole motor (10) of any of the preceding claims, wherein said claw pole teeth (32) extend from a periphery of said plurality of stator elements (30), and an outer diameter of said drive unit (48) is less than or substantially equal to an inner diameter defined by said claw pole teeth (32).

8. The claw pole motor (10) of any of the preceding claims, wherein said stationary stator (22) is supported by a stationary shaft (14), and wiring associated with said drive unit (48) is arranged within a hollow interior of said stationary shaft (14).

9. A claw pole motor (10) comprising:
a housing (12);
a stationary shaft (14) associated with said housing (12);
a stator assembly (22) as claimed in any preceding claim; wherein the rotor (24) is operable to generate a cooling flow for cooling said stator assembly (22).

10. The claw pole motor (10) of claim 9, wherein said rotor (24) includes a plurality of fins (50) configured to force a flow of air into an interior of said housing (12) as said rotor (24) rotates about said axis.

11. The claw pole motor (10) of claim 9 or claim 10, wherein said stationary shaft (14) is a generally hollow and is arranged in fluid communication with an interior of said housing (12).

12. The claw pole motor (10) of any of the preceding claims, wherein said rotor (24) and said stator assembly (22) are arranged generally concentrically, said stator assembly (22) being at least partially positioned within a hollow interior of said rotor (24).

13. The claw pole motor of claim 9, wherein said cooling flow is configured to flow through said plurality of stator elements (30).

## Patentansprüche

1. Klauenpolmotor (10), umfassend:
einen Rotor (24), welcher rund um eine Achse drehbar ist; und
eine Statoranordnung (22) beinhaltend:
eine Vielzahl von Statorelementen (30) mit einem oder mehreren Klauenpolzähnen (32), sodass, wenn die Vielzahl von Statorelementen (30) angeordnet ist, die Klauenpolzähne (32) sich zwischen einem ersten und einem zweiten Ende der Statoranordnung erstrecken, und
zumindest eine Spulenwicklung (42), welche zwischen der Vielzahl von Statorelementen (30) positioniert ist; wobei die Statorelemente (30) beinhalten:
ein erstes Statorendelement (36);
ein zweites Statorendelement (36);
zwei interne Statorelemente (38), welche sich zwischen dem ersten Statorendelement (36) und dem zweiten Statorendelement (36) befinden, wobei jedes von dem ersten Statorendelement (36), dem zweiten Statorendelement (36) und den zwei inneren Statorelementen (38) im Allgemeinen parallel angeordnet ist;
wobei der Klauenpolmotor (10) **dadurch gekennzeichnet ist, dass** eine Antriebseinheit (48) zwischen zwei benachbarten interne Statorelementen (38) zwischengelegt ist.

2. Klauenpolmotor (10) nach Anspruch 1, wobei das erste Statorendelement (36), das zweite Statorendelement (36) und die zwei internen Statorelemente (38) relativ zueinander rund um eine Achse gedreht werden.

3. Klauenpolmotor (10) nach Anspruch 1 oder Anspruch 2, wobei die Klauenpolzähne (32) des ersten Statorendelements (36), des zweiten Statorendelements (36) und der zwei internen Statorelemente (38) in einer vermaschenden Beziehung angeordnet sind.

4. Klauenpolmotor (10) nach einem der Ansprüche 1-3, wobei die Statoranordnung (22) ein erstes internes Statorendelement (38) und ein zweites internes Statorendelement (38) beinhaltet, wobei die erste Spulenwicklung (42) zwischen dem ersten Statorendelement (36) und dem ersten internen Statorelement (38) positioniert ist, und wobei die zweite Spulenwicklung (42) zwischen dem zweiten internen Statorelement (38) und dem zweiten Statorendelement (36) positioniert ist.

5. Klauenpolmotor (10) nach einem der vorstehenden Ansprüche, wobei zumindest eines der Vielzahl von Statorelementen (30) eine Funktion (44) zum Zurückhalten der zumindest einen Spulenwicklung (42) beinhaltet.

6. Klauenpolmotor (10) nach Anspruch 5, wobei die Funktion (44) eine zylindrische Funktion (44) beinhaltet, welche innerhalb einer zentralen Bohrung (46) der zumindest einen Spulenwicklung (42) aufgenommen werden kann.

7. Klauenpolmotor (10) nach einem der vorstehenden Ansprüche, wobei die Klauenpolzähne (32) sich von einem Umfang der Vielzahl von Statorelemente (30) aus erstrecken, und ein äußerer Durchmesser der Antriebseinheit (48) kleiner als oder im Wesentlichen gleich einem inneren Durchmesser ist, welche durch die Klauenpolzähne (32) definiert wird.

8. Klauenpolmotor (10) nach einem der vorstehenden Ansprüche, wobei der stationäre Stator (22) durch eine stationäre Welle (14) getragen wird, und mit dieser Antriebseinheit (48) verknüpfte Verdrahtung innerhalb eines internen Hohlraums der stationären Welle (14) angeordnet ist.

9. Klauenpolmotor (10), umfassend:
ein Gehäuse (12);
eine stationäre Welle (14), welche mit dem Gehäuse (12) verknüpft ist;
eine Statoranordnung (22) nach einem der vorstehenden Ansprüche; wobei der Rotor (24) betrieben werden kann, um einen Kühlstrom zum Kühlen der Statoranordnung (22) zu erzeugen.

10. Klauenpolmotor (10) nach Anspruch 9, wobei der Rotor (24) eine Vielzahl von Stegen (50) beinhaltet, welche konfiguriert sind, um einen Luftstrom in das Innere des Gehäuses (12) zu zwingen, während der Rotor (24) rund um die Achse rotiert.

11. Klauenpolmotor (10) nach Anspruch 9 oder Anspruch 10, wobei die stationäre Welle (14) eine im Allgemeinen hohle ist und in Fluidverbindung mit einem Inneren des Gehäuses (12) angeordnet ist.

12. Klauenpolmotor (10) nach einem der vorstehenden Ansprüche, wobei der Rotor (24) und die Statoranordnung (22) im Allgemeinen konzentrisch angeordnet sind, wobei die Statoranordnung (22) zumindest teilweise innerhalb eines internen Hohlraums des Rotors (24) positioniert ist.

13. Klauenpolmotor nach Anspruch 9, wobei der Kühlstrom konfiguriert ist, um durch die Vielzahl von Statorelementen (30) zu fließen.

## Revendications

1. Moteur à griffes (10) comprenant :
un rotor (24) pouvant tourner autour d'un axe ; et
un ensemble stator (22) incluant :
une pluralité d'éléments de stator (30) comportant une ou plusieurs dents formant griffes (32) de sorte que lorsque ladite pluralité d'éléments de stator (30) est assemblée, lesdites dents formant griffes (32) s'étendent entre une première extrémité et une seconde extrémité dudit ensemble stator, et
au moins un bobinage (42) positionné entre ladite pluralité d'éléments de stator (30) ; dans lequel lesdits éléments de stator (30) incluent :
un premier élément de stator d'extrémité (36) ;
un second élément de stator d'extrémité (36) ;
deux éléments de stator intérieurs (38) disposés entre ledit premier élément de stator d'extrémité (36) et ledit second élément de stator d'extrémité (36), chacun dudit premier élément de stator d'extrémité (36), dudit second élément de stator d'extrémité (36) et desdits deux éléments de stator intérieurs (38) étant agencé de façon généralement parallèle ;
dans lequel le moteur à griffes (10) est **caractérisé en ce qu'**une unité d'entraînement (48) est intercalée entre deux éléments de stator intérieurs adjacents (38).

2. Moteur à griffes (10) selon la revendication 1, dans lequel ledit premier élément de stator d'extrémité (36), ledit second élément de stator d'extrémité (36) et lesdits deux éléments de stator intérieurs (38) sont mis en rotation l'un par rapport à l'autre autour d'un axe.

3. Moteur à griffes (10) selon la revendication 1 ou la revendication 2, dans lequel lesdites dents formant griffes (32) dudit premier élément de stator d'extrémité (36), dudit second élément de stator d'extrémité (36) et desdits deux éléments de stator intérieurs (38) sont agencées dans une relation d'engrènement mutuel.

4. Moteur à griffes (10) selon l'une quelconque des revendications 1-3, dans lequel ledit ensemble stator (22) inclut un premier élément de stator intérieur (38) et un second élément de stator intérieur (38), ledit premier bobinage (42) étant positionné entre ledit premier élément de stator d'extrémité (36) et ledit premier élément de stator intérieur (38) et ledit second bobinage (42) étant positionné entre ledit second élément de stator intérieur (38) et ledit second élément de stator d'extrémité (36).

5. Moteur à griffes (10) selon l'une quelconque des revendications précédentes, dans lequel au moins un de ladite pluralité d'éléments de stator (30) inclut un organe (44) destiné à retenir ledit au moins un bobinage (42).

6. Moteur à griffes (10) selon la revendication 5, dans lequel ledit organe (44) inclut un organe cylindrique (44) pouvant être reçu dans un alésage central (46) dudit au moins un bobinage (42).

7. Moteur à griffes (10) selon l'une quelconque des revendications précédentes, dans lequel lesdites dents formant griffes (32) s'étendent depuis une périphérie de ladite pluralité d'éléments de stator (30), et un diamètre externe de ladite unité d'entraînement (48) est inférieur ou sensiblement égal à un diamètre interne défini par lesdites dents formant griffes (32).

8. Moteur à griffes (10) selon l'une quelconque des revendications précédentes, dans lequel ledit stator stationnaire (22) est supporté par un arbre stationnaire (14), et le câblage associé à ladite unité d'entraînement (48) est agencé dans un espace intérieur creux dudit arbre stationnaire (14).

9. Moteur à griffes (10) comprenant :
un carter (12) ;
un arbre stationnaire (14) associé audit carter (12) ;
un ensemble stator (22) selon une quelconque revendication précédente ; dans lequel le rotor (24) permet de générer un flux de refroidissement pour refroidir ledit ensemble stator (22).

10. Moteur à griffes (10) selon la revendication 9, dans lequel ledit rotor (24) inclut une pluralité d'ailettes (50) configurées pour forcer un flux d'air dans un espace intérieur dudit carter (12) pendant que ledit rotor (24) tourne autour dudit axe.

11. Moteur à griffes (10) selon la revendication 9 ou la revendication 10, dans lequel ledit arbre stationnaire (14) est généralement creux et est agencé en communication fluide avec un espace intérieur dudit carter (12).

12. Moteur à griffes (10) selon l'une quelconque des revendications précédentes, dans lequel ledit rotor (24) et ledit ensemble stator (22) sont agencés de façon généralement concentrique, ledit ensemble stator (22) étant au moins partiellement positionné dans un espace intérieur creux dudit rotor (24).

13. Moteur à griffes selon la revendication 9, dans lequel ledit flux de refroidissement est configuré pour circuler à travers ladite pluralité d'éléments de stator (30).
